# FASCICULE DE BREVET EUROPEEN

(11) **EP 3 669 164 B1**
(45) Date de publication et mention de la délivrance du brevet: **02.10.2024**
(21) Numéro de dépôt: 18765957.8
(22) Date de dépôt: 14.08.2018
(51) Int. Cl.: G01N 3/08

(54) **PÉNÉTROMÈTRE STATIQUE À INJECTION**
INJIZIERBARES STATISCHES PENETROMETER
INJECTABLE STATIC PENETROMETER

(30) Priorité: 18.08.2017 FR 1757733
(43) Date de publication de la demande: 24.06.2020
(73) Titulaire: Equatech.R&D, 74960 Annecy (FR)
(72) Inventeur: RIEGEL, Pierre, 74330 Poissy (FR)
(74) Mandataire: IP Trust
(86) Numéro de dépôt international: PCT/FR2018/052063
(87) Numéro de publication internationale: WO 2019/034823

(56) Documents cités:
- FR-A1- 2 650 011
- KR-A- 20110 108 652
- KR-B1- 100 614 602
- NL-A- 7 301 924

## Description

### DOMAINE DE L'INVENTION

La présente invention concerne le domaine de la géotechnique et de la géologie. Elle concerne en particulier un dispositif de mesure de la résistance à la pénétration d'un sol, appelé communément un pénétromètre.

### ARRIERE PLAN TECHNOLOGIQUE DE L'INVENTION

La compacité des sols est habituellement mesurée, soit en mode statique, soit en mode dynamique, par un dispositif de mesure appelé pénétromètre. Un pénétromètre comporte classiquement des tiges raccordées bout à bout pour former un train de tiges au bout duquel est fixée une pointe de mesure, destinée à s'enfoncer dans le sol sur des profondeurs pouvant atteindre plusieurs dizaines de mètres.

En mode statique, le train de tiges est poussé par des vérins, provoquant l'enfoncement progressif de la pointe de mesure ; cette dernière mesure la résistance de pointe et éventuellement le frottement latéral sur un manchon cylindrique situé au-dessus de la pointe. Ces mesures sont enregistrées de manière continue ou discontinue selon un pas régulier. La mesure statique de la résistance à la pénétration du sol est sans conteste la plus précise car elle est réalisée directement sur la pointe de mesure, au fond du sondage.

Ce mode de mesure statique se heurte néanmoins à quelques difficultés. Lorsque la résistance du sol est importante (sols très compacts), il devient très complexe d'appliquer une poussée suffisante pour générer l'enfoncement de la pointe. Par ailleurs, quand la pointe de mesure et le train de tiges sont enfoncés à plusieurs mètres, le frottement exercé par le sol sur le train de tiges doit également être vaincu par une forte poussée pour poursuivre l'enfoncement. Il en résulte que le poids, la puissance et la qualité de l'ancrage des machines qui actionnent les vérins ne sont parfois pas suffisants pour assurer en toutes circonstances une mesure en mode statique.

Il existe par ailleurs un autre mode de mesure dit mode dynamique, basé sur l'enfoncement de la pointe par battage du train de tiges. Le battage est réalisé en faisant chuter une masse ou un marteau sur une enclume enfonçant le train de tiges par à-coups. Connaissant l'énergie libérée par la chute de la masse et connaissant l'enfoncement par à-coup, on calcule la résistance à la pénétration du sol, compte tenu de divers coefficients de perte d'énergie. Ce mode dynamique présente une plus grande capacité de pénétration que le mode statique, en particulier dans les sols de compacité élevée. Il arrive néanmoins que l'énergie de frappe du battage soit insuffisante pour vaincre le frottement latéral du sol sur les tiges.

L'inconvénient principal d'une mesure en mode dynamique reste sa forte imprécision par rapport à une mesure en mode statique ; en effet, une mesure en mode dynamique ne donne qu'une information partielle de la résistance du sol en fonction de la profondeur, du fait de l'enfoncement par à-coup et en général de la non dissociation de la résistance de pointe par rapport aux frottements latéraux parasites.

Certains pénétromètres dits statiques dynamiques, sont capables de travailler en mode mixte dynamique et statique, dès que le mode tout statique n'est plus possible, typiquement en présence de couches de sol présentant une compacité élevée, la résistance à la pénétration devenant trop importante.

On connaît notamment le document EP2535460, qui décrit un dispositif comprenant une tige de mesure terminée par une pointe de mesure, un tube de protection disposé autour de la tige de mesure, des moyens de descente et de relevage pour effectuer l'enfoncement dans le sol en mode statique, des moyens de frappe pour effectuer l'enfoncement dans le sol en mode dynamique et des moyens de mesure pour déterminer la résistance à la pénétration du sol. La construction particulière de ce dispositif permet d'isoler l'enfoncement dynamique du tube de protection extérieur, de la prise de mesure statique de la résistance en pointe et du frottement latéral à travers la tige de mesure intérieure. Ainsi la tige de mesure ne subit pas les efforts mécaniques exercés par les moyens de frappe et la prise de mesure peut être réalisée en mode statique.

Ce dispositif n'apporte néanmoins pas de solution à la problématique des frottements entre le sol et le tube disposé autour de la tige de mesure, lesquels peuvent atteindre plusieurs tonnes par mètre carré dans le cas de terrains « collants ». Les moyens de descente, de relevage et de battage dans ce dispositif doivent être dimensionnés pour développer des forces supérieures à la résistance du sol et à ces frottements parasites.

Le document FR2650011 propose un pénétromètre utilisable lors d'opérations de sondage et un procédé pour la libération dudit pénétromètre lorsqu'il est bloqué au cours de ces opérations.

### OBJET DE L'INVENTION

Un objet de la présente invention est de proposer une solution aux inconvénients de l'état de l'art, en particulier un pénétromètre statique à injection, simple de mise en oeuvre, permettant des mesures précises et continues de la compacité d'un sol, et s'affranchissant des forces de frottements latéraux sur le train de tubes/tiges.

### BREVE DESCRIPTION DE L'INVENTION

L'invention concerne un pénétromètre pour la mesure en mode statique de la résistance à la pénétration d'un sol comprenant au moins une tige centrale terminée en une première extrémité par une pointe de mesure et au moins un tube creux entourant la tige centrale et à l'intérieur duquel cette dernière est apte à coulisser.

Le tube creux du pénétromètre selon l'invention comprend :
- une première partie comportant au moins un joint d'étanchéité entre sa paroi interne et la tige centrale,
- une deuxième partie présentant un diamètre inférieur à celui de la première partie, et à l'intérieur de laquelle un fluide est destiné à être injecté ;
- au moins un orifice d'expulsion situé entre la première et la deuxième partie, ledit fluide étant destiné à sortir par l'orifice d'expulsion.

Selon d'autres caractéristiques avantageuses et non limitatives de l'invention, prises seules ou selon toute combinaison techniquement réalisable :
- le pénétromètre comprend un système d'injection pour l'introduction du fluide à l'intérieur de la deuxième partie du tube creux ;
- le fluide comprend de l'eau pure ou un mélange d'eau et d'un faible pourcentage de plastifiant biodégradable de type polymère ou d'argile en suspension ;
- l'axe central de l'orifice d'expulsion forme un angle compris entre 30 et 60° avec l'axe du tube creux ;
- l'orifice d'expulsion est constitué par une duse permettant de réguler le débit du fluide ;
- le joint d'étanchéité est constitué par un joint à lèvre ;
- la tige centrale et la première partie du tube creux ont été rectifiées, de manière à présenter respectivement des diamètres extérieur et intérieur précis à +/- 50 microns ;
- la première partie du tube creux s'étend sur au moins 2 mètres au-dessus de la pointe de mesure de la tige centrale.

### BREVE DESCRIPTION DES DESSINS

D'autres caractéristiques et avantages de l'invention ressortiront de la description détaillée qui va suivre en référence aux figures annexées sur lesquelles :
- la figure 1 présente un schéma de principe de la portion aval d'un pénétromètre conforme à l'invention ;
- la figure 2 présente un schéma de principe de la portion amont d'un pénétromètre conforme à l'invention.

### DESCRIPTION DETAILLEE DE L'INVENTION

La présente invention concerne un pénétromètre statique 100 pour la mesure en mode statique de la résistance à la pénétration d'un sol.

Le pénétromètre statique 100 comprend une tige centrale 1 terminée en une première extrémité par une pointe de mesure 11. A titre d'exemple, une pointe de mesure bien connue de type « Gouda » pourra être montée au niveau de la première extrémité de ladite tige centrale 1.

Il comprend également un tube creux 2 entourant la tige centrale 1. Le diamètre intérieur du tube creux 2 et le diamètre extérieur de la tige centrale 1 sont adaptés de sorte que cette dernière puisse coulisser librement à l'intérieur du tube creux 2.

Le couple formé par la tige centrale 1 et le tube creux 2 est destiné à s'enfoncer dans le sol, la pointe 11 en bout ayant pour fonction de mesurer la résistance à la pénétration du sol. Pour tester la résistance du sol à des profondeurs diverses, le couple de tige 1 et tube 2 peut être composé de plusieurs segments de tige et segments de tube raccordés bout à bout, pour former un train de tige 1/tube 2, pouvant être enfoncé dans le sol sur des profondeurs de plusieurs dizaines de mètres.

Dans la suite de la description, le pénétromètre sera considéré en situation d'essai, c'est-à-dire avec le train de tige/tube enfoncé dans le sol, la pointe de mesure 11 en fond.

Tout pénétromètre statique comportant des moyens mécaniques d'enfoncement configurés pour enfoncer le train de tige/tube dans le sol, nous ne décrirons pas ici un type particulier de configuration pour ces moyens mécaniques. Ils permettent d'exercer une poussée suffisante pour enfoncer le train de tige/tube et, lorsque l'essai est terminé, d'exercer une traction pour remonter ledit train à la surface. En général, un pénétromètre comprend une cellule reliée au train de tige 1/tube 2, destinée à demeurer au-dessus de la surface et par l'intermédiaire de laquelle la poussée pour l'enfoncement va être appliquée par les moyens mécaniques.

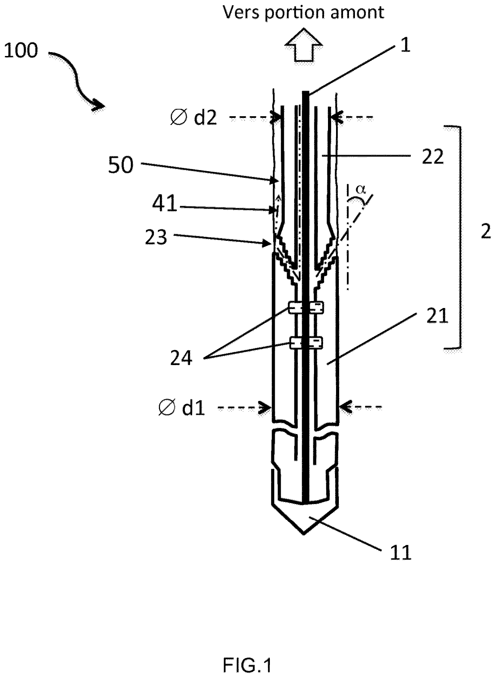

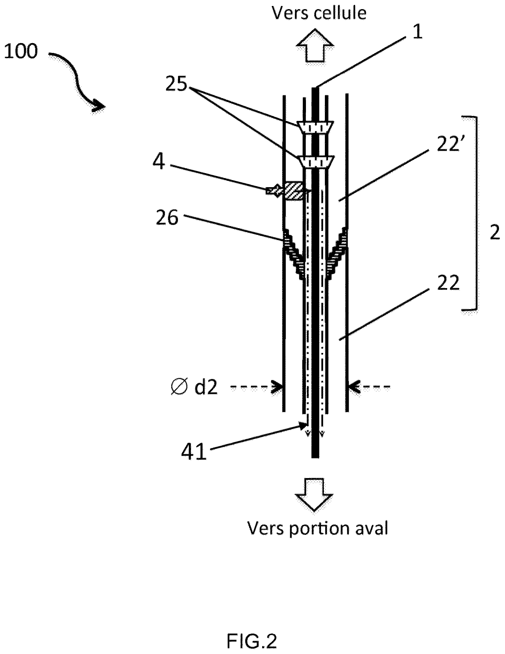

Pour limiter la puissance requise pour l'enfoncement et le relevage du train de tige/tube, le pénétromètre statique 100 selon l'invention présente des caractéristiques particulières qui vont être décrites en référence à la figure 1 présentant une portion aval du pénétromètre (c'est-à-dire la portion du côté de la pointe de mesure 11) et à la figure 2 présentant une portion amont du pénétromètre (c'est-à-dire la portion du côté de la cellule, au-dessus de la surface).

Tout d'abord, le tube creux 2 comprend une première partie 21 de diamètre extérieur d1 et une deuxième partie 22 de diamètre extérieur d2. Le diamètre d2 de la deuxième partie 22 est inférieur au diamètre d1 de la première partie 21.

La première partie 21 du tube creux 2 constitue un « tube masse », destiné à maintenir un frottement latéral avec le sol au cours de l'enfoncement. En effet, dans le cas de pénétromètres puissants, destinés à sonder des profondeurs importantes, le couple tige/tube peut atteindre une masse de l'ordre de 10kg au mètre linéaire. Selon le type de sol traversé, le poids d'un train de tige/tube est donc susceptible de dépasser la résistance de pénétration dudit sol et, s'il n'y a pas ou très peu de frottement latéraux contre le tube creux 2, de générer un enfoncement « libre » et non contrôlé du train de tige/tube, sans mesure possible et avec perte éventuelle de tout ou partie du train de tige 1/tube 2.

Ainsi, dans le pénétromètre statique 100 selon l'invention, une première partie 21 du tube creux 2 (de diamètre d1), agissant comme un tube masse, est prévue pour maintenir un frottement latéral avec le sol au cours de l'enfoncement. La longueur de cette première partie 21 est choisie de sorte que les frottements latéraux entre la première partie 21 et le sol soient supérieurs au poids du train de tige/tube prévu pour l'essai (dépendant du nombre de segments mis bout à bout et donc de la profondeur à investiguer). Par exemple, la première partie 21 du tube creux 2 pourra s'étendre sur 2 à 3 mètres au-dessus de la pointe de mesure 11 de la tige centrale 1. Cette première partie 21 du tube creux 2 peut être composée de plusieurs segments de tube creux 2, en fonction de la longueur d'un segment ; chaque segment présente un diamètre d1 et est vissé sur le segment de tube adjacent. De la même façon, la tige 1 à l'intérieur desdits segments de tube 2 peut être constituée de plusieurs segments de tige vissés les uns à la suite des autres.

La deuxième partie 22 présente un diamètre inférieur au diamètre de la première partie 21. A titre d'exemple, la première partie 21 du tube creux 2 présente un diamètre extérieur de 39 mm, soit très légèrement supérieur au diamètre de la pointe (38 mm), et la deuxième partie 22 du tube creux 2 présente un diamètre extérieur de 32mm.

La deuxième partie 22 du tube creux 2 est configurée de sorte qu'un fluide 41 puisse être injecté dans son espace creux intérieur.

Le tube creux 2 comprend également au moins un orifice d'expulsion 23 situé entre la première 21 et la deuxième 22 partie. L'orifice d'expulsion 23 permet de mettre en communication l'intérieur de la deuxième partie 22 du tube creux 2 et l'extérieur. Le fluide, injecté dans la deuxième partie 22 du tube creux 2 est ainsi destiné à sortir par ledit orifice 23. Avantageusement, plusieurs orifices d'expulsion 23 sont aménagés dans le tube creux 2 et régulièrement répartis le long de son pourtour extérieur.

Le fluide 41 sortant du (ou des) orifice(s) d'expulsion 23 va remonter le long des parois extérieures de la deuxième partie 22 du tube creux 2 : il génère alors un espace annulaire extérieur 50 entre lesdites parois extérieures et le sol, ce qui va limiter les frottements latéraux entre la deuxième partie 22 du tube creux 2 et le sol au cours de l'enfoncement.

La première partie 21 et la deuxième partie 22 du tube creux 2 sont rendues solidaires par vissage. Les fuites éventuelles de fluide 41 au niveau du filetage peuvent participer à la lubrification générale du pénétromètre 100 ; et en pratique, la pression d'injection appliquée pour introduire le fluide 41 dans l'espace creux intérieur de la deuxième partie 22 du tube 2 présente un flux prépondérant vers les orifices d'expulsion 23, maintenant ainsi la continuité du processus d'injection. Selon une variante, la liaison entre les deux parties 21,22 est rendue étanche par interposition d'un joint torique, permettant de limiter les fuites de fluide 41 au niveau du filetage.

Avantageusement, les orifices d'expulsion 23 sont constitués par des duses permettant de réguler le débit du fluide 41.

Préférentiellement, pour favoriser la remontée du fluide 41 vers la surface lors de sa sortie du (ou des) orifice(s) d'expulsion 23, l'axe central de l'orifice 23, qui s'étend à travers la paroi du tube creux 2, forme un angle α compris entre 30 et 60° avec l'axe du tube creux 2 (figure 1).

De plus, le tube creux 2 comprend au moins un joint d'étanchéité 24 entre la paroi interne de la première partie 21 du tube creux 2 et la tige centrale 1. Ce joint d'étanchéité 24 a pour rôle d'empêcher le passage du fluide 41 à l'intérieur de la première partie 21 du tube creux 2 et ainsi d'éviter que le fluide n'atteigne la première extrémité de la tige centrale 1 et la pointe de mesure 11. L'injection de fluide 41 au voisinage de la pointe de mesure 11 fausserait les mesures de résistance du sol, notamment en modifiant les frottements au niveau du manchon de ladite pointe 11.

Préférentiellement, au moins deux joints d'étanchéité 24 sont mis en place entre la paroi interne de la première partie 21 du tube creux 2 et la tige centrale 1.

Selon un mode de réalisation avantageux, la tige centrale 1 et la première partie 21 du tube creux 2 sont rectifiées, de manière à présenter respectivement des diamètres extérieur et intérieur précis à +/- 50 microns, afin de limiter les frottements internes et améliorer l'étanchéité du joint d'étanchéité 24. Un (ou plusieurs) joint(s) à lèvre peut (peuvent) ainsi être efficacement utilisé(s) pour éviter le passage du fluide 41 à l'intérieur de la première partie 21 du tube creux 2. Dans le cas d'une tige rectifiée, les frottements entre le joint à lèvre 24 et la tige centrale 1 sont de l'ordre du kilogramme, soit inférieurs aux seuils de précision de la mesure de résistance à la pénétration du sol. La présence d'un ou deux joints à lèvre ne modifie donc pas le coulissement de la tige centrale 1 au point d'affecter la précision de la mesure du pénétromètre statique 100.

Afin d'injecter le fluide 41, le pénétromètre statique 100 selon l'invention comprend un système d'injection 4 pour l'introduction du fluide 41 à l'intérieur de la deuxième partie 22 du tube creux 2 (figure 2). Comme évoqué précédemment, le fluide 41 est ensuite destiné à sortir par le ou les orifice(s) d'expulsion 23.

La figure 2 illustre une portion amont du pénétromètre 100 selon l'invention, destinée à demeurer au-dessus de la surface du sol, au niveau de laquelle le fluide 41 est injecté. En particulier, le fluide 41 est introduit, sous pression, dans une sous-partie 22' du tube creux 2 solidaire de la deuxième partie 22. La sous-partie 22' est avantageusement vissée sur la deuxième partie 22, l'étanchéité cette liaison 26 étant assurée par la présence d'un joint torique. Cette liaison permet de rajouter des segments de deuxièmes parties 22 de tube creux 2 (et parallèlement des segments de tige centrale 1) au fur et à mesure de l'enfoncement du pénétromètre 100 dans le sol.

Le système d'injection 4 pour l'introduction du fluide 41 dans la sous-partie 22' comprend par exemple une pièce vissée, comportant une pipe d'injection avec clapet.

Au moins un joint d'étanchéité amont 25 est disposé entre la paroi interne de la sous-partie 22' et la tige centrale 1, pour bloquer la circulation du fluide 41 vers le haut du pénétromètre 100. Selon un mode de réalisation avantageux, deux joints d'étanchéité amont 25 de type joints à lèvre sont utilisés (figure 2).

Avantageusement, l'espace annulaire d'injection interne entre la tige centrale 1 et la paroi interne de la sous-partie 22' (et de la deuxième partie 22) du tube creux 2 est de 2 mm, permettant un écoulement sous pression du fluide 41 sur toute la longueur desdites parties 22',22.

Le fluide d'injection 41 pourra consister en de l'eau pure ou plus généralement en un mélange d'eau et d'un faible pourcentage de plastifiant biodégradable de type polymère (Polyfor, Polygum, ou équivalent), ou d'argile bentonitique en suspension.

La viscosité est maintenue sous les seuils nécessaires au bon écoulement sous pression du fluide 41 dans l'espace creux interne du tube 2.

Dans la pratique, lorsque le pénétromètre 100 selon l'invention est mis en oeuvre, les étapes suivantes sont opérées :
- La tige 1 (avec la pointe de mesure 11 au fond) et autour d'elle la première partie 21 du tube creux 2 puis, à la suite, la deuxième partie 22 du tube creux 2 sont enfoncées dans le sol en mode statique ou dynamique selon la résistance du sol ;
- Le fluide 41, contenu dans un réservoir sous pression, est alors introduit via le système d'injection 4, avec un débit contrôlé, à l'intérieur de la sous-partie 22' communiquant avec l'intérieur de la deuxième partie 22 du tube creux 2 ;
- L'enfoncement du train de tige 1/tube 2 dans le sol est poursuivi en contrôlant la remontée progressive du fluide 41 par l'espace annulaire extérieur 50 entre le sol et la paroi extérieure de la deuxième partie 22 du tube creux 2.
- A chaque nouveau couple de segments tige 1/tube 2 ajouté au train (au niveau de la liaison 26), le système d'injection 4 est déconnecté, libérant par un clapet la surpression interne du tube creux 2.
- En fin d'essai, l'injection est généralement déconnectée et le train de tige/tube remonté au moyen de vérins.
- La pression peut être maintenue à la remontée dans le cas de sols très instables ou fluants, pour éviter les blocages et colmatages importants des espaces internes du train tige/tube.

Le pénétromètre statique 100 à injection selon l'invention pourra avantageusement comporter les caractéristiques du pénétromètre statique décrit dans la demande FR1756819 déposée par la demanderesse : en effet, la mesure du déplacement de la pointe de mesure 11 au cours de l'enfoncement par ce pénétromètre statique, basée sur des principes mécaniques, est tout à fait compatible avec les caractéristiques du présent pénétromètre statique 100 à injection.

## Revendications

1. Pénétromètre (100) pour la mesure en mode statique de la résistance à la pénétration d'un sol comprenant une tige centrale (1) terminée en une première extrémité par une pointe de mesure (11) et un tube creux (2) entourant la tige centrale (1) et à l'intérieur duquel cette dernière est apte à coulisser,
le pénétromètre (100) étant **caractérisé en ce que** le tube creux (2) comprend :
• une première partie (21) comportant au moins un joint d'étanchéité (24) entre sa paroi interne et la tige centrale (1), la première partie (21) du tube creux (2) s'étendant sur au moins 2 mètres au-dessus de la pointe de mesure (11) de la tige centrale (1),
• une deuxième partie (22), en amont de la première partie (21), présentant un diamètre (d2) inférieur à celui (d1) de la première partie (21), et à l'intérieur de laquelle un fluide (41) est destiné à être injecté;
• au moins un orifice d'expulsion (23) situé entre la première (21) et la deuxième (22) partie, ledit fluide (41) étant destiné à sortir par l'orifice d'expulsion (23) .

2. Pénétromètre (100) selon la revendication précédente, comprenant un système d'injection (4) pour l'introduction du fluide (41) à l'intérieur de la deuxième partie (22) du tube creux (2).

3. Pénétromètre (100) selon l'une des revendications précédentes, dans lequel le fluide (41) comprend de l'eau pure ou un mélange d'eau et d'un faible pourcentage de plastifiant biodégradable de type polymère ou d'argile en suspension.

4. Pénétromètre (100) selon l'une des revendications précédentes, dans lequel l'axe central de l'orifice d'expulsion (23) forme un angle compris entre 30 et 60° avec l'axe du tube creux (2).

5. Pénétromètre (100) selon l'une des revendications précédentes, dans lequel l'orifice d'expulsion (23) est constitué par une duse permettant de réguler le débit du fluide.

6. Pénétromètre (100) selon l'une des revendications précédentes, dans lequel le joint d'étanchéité (24) est constitué par un joint à lèvre.

7. Pénétromètre (100) selon l'une des revendications précédentes, dans lequel la tige centrale (1) et la première partie (21) du tube creux (2) ont été rectifiées, de manière à présenter respectivement des diamètres extérieur et intérieur précis à +/- 50 microns.

## Patentansprüche

1. Penetrometer (100) für die Messung des Widerstands gegen die Penetration eines Bodens in einem statischen Modus, umfassend einen Mittelstab (1), der an einem ersten Ende mit einer Messspitze (11) endet, und ein Hohlrohr (2), das den Mittelstab (1) umgibt, und das geeignet ist, in dem Inneren des Letzteren zu gleiten,
wobei das Penetrometer (100) **dadurch gekennzeichnet ist, dass** das Hohlrohr (2) umfasst:
• einen ersten Teil (21), der zwischen seiner Innenwand und dem Mittelstab (1) mindestens eine Dichtung (24) aufweist, wobei der erste Teil (21) des Hohlrohrs (2) sich über mindestens 2 Meter über der Messspitze erstreckt (11) des Mittelstabs (1) erstreckt,
• einen zweiten Teil (22), stromaufwärts des ersten Teils (21), der einen Durchmesser (d2), der kleiner als derjenige (d1) des ersten Teils (21) ist, vorweist, und wobei ein Fluid (41) dafür bestimmt ist, in dessen Inneres eingespritzt zu werden;
• mindestens eine Ausstoßöffnung (23), die sich zwischen dem ersten (21) und dem zweiten (22) Teil befindet, wobei das Fluid (41) dafür bestimmt ist, durch die Ausstoßöffnung (23) auszutreten.

2. Penetrometer (100) nach dem vorstehenden Anspruch, umfassend ein Einspritzsystem (4) zum Einbringen des Fluids (41) in das Innere des zweiten Teils (22) des Hohlrohrs (2).

3. Penetrometer (100) nach einem der vorstehenden Ansprüche, wobei das Fluid (41) reines Wasser oder eine Mischung aus Wasser und einem geringen Prozentsatz eines biologisch abbaubaren Weichmachers einer Polymerart oder Ton in Suspension umfasst.

4. Penetrometer (100) nach einem der vorstehenden Ansprüche, wobei die Mittelachse der Ausstoßöffnung (23) mit der Achse des Hohlrohrs (2) einen Winkel zwischen 30 und 60° ausbildet.

5. Penetrometer (100) nach einem der vorstehenden Ansprüche, wobei die Ausstoßöffnung (23) aus einer Düse besteht, die es ermöglicht, den Durchfluss des Fluids zu regulieren.

6. Penetrometer (100) nach einem der vorstehenden Ansprüche, wobei die Dichtung (24) aus einer Lippendichtung besteht.

7. Penetrometer (100) nach einem der vorstehenden Ansprüche, wobei der Mittelstab (1) und der erste Teil (21) des Hohlrohrs (2) auf eine Weise geschliffen sind, um einen Außen- beziehungsweise Innendurchmesser von genau +/-50 Mikrometer vorzuweisen.

## Claims

1. Penetrometer (100) for statically measuring the penetration resistance of soil, comprising a central rod (1) terminated at a first end by a measuring tip (11), and a hollow tube (2) surrounding the central rod (1) and inside which the latter can slide,
the penetrometer (100) being **characterized in that** the hollow tube (2) comprises:
• a first portion (21) having at least one seal (24) between its inner wall and the central rod (1), the first portion (21) of the hollow tube (2) extending at least 2 meters above the measuring tip (11) of the central rod (1),
• a second portion (22), upstream of the first portion (21), having a diameter (d2) smaller than that (d1) of the first portion (21), and inside which a fluid (41) is intended to be injected;
• at least one expulsion opening (23) located between the first (21) and the second (22) portion, said fluid (41) being intended to exit through the expulsion opening (23).

2. Penetrometer (100) according to the preceding claim, comprising an injection system (4) for introducing the fluid (41) inside the second portion (22) of the hollow tube (2).

3. Penetrometer (100) according to any of the preceding claims, wherein the fluid (41) comprises pure water or a mixture of water and a small percentage of biodegradable polymer plasticizer or suspended clay.

4. Penetrometer (100) according to any of the preceding claims, wherein the central axis of the expulsion opening (23) forms an angle of between 30 and 60° with the axis of the hollow tube (2).

5. Penetrometer (100) according to any of the preceding claims, wherein the expulsion opening (23) is formed by a nozzle allowing the fluid flow to be regulated.

6. Penetrometer (100) according to any of the preceding claims, wherein the seal (24) is formed by a lip seal.

7. Penetrometer (100) according to any of the preceding claims, wherein the central rod (1) and the first portion (21) of the hollow tube (2) have been ground so as to have outer and inner diameters respectively accurate to +/- 50 microns.
